# EUROPEAN PATENT APPLICATION

(11) **EP 4 485 305 A1**
(43) Date of publication of application: **01.01.2025**
(21) Application number: 23182635.5
(22) Date of filing: 30.06.2023
(51) Int. Cl.: G06Q 10/0639, G06Q 50/06

(54) **SYSTEM AND METHOD FOR ASSESSING THE LEVEL OF URBAN ENERGY PERFORMANCE**

(30) Priority: 28.06.2023 PT 2023118765
(71) Applicant: INEGI - Institute of Science and Innovation in Mechanical and Industrial Engineering, 4200-465 Porto (PT); Universidade Do Porto, 4099-002 Porto (PT)
(72) Inventor: Leite de Faria Coelho da Silva, Mafalda, 4200-465 PORTO (PT); Pereira da Costa, Cátia Sofia, 4200-465 PORTO (PT); Gonçalves Azevedo, Isabel Maria, 4200-465 PORTO (PT); Marques Cardoso, João Pedro, 4200-465 PORTO (PT); Klein Soares, Felipe, 4200-465 PORTO (PT)
(74) Representative: Patentree

(57) **Abstract**

System for use in discriminating urban areas according to energy performance namely whether the energy performance of urban areas is enhanced or impaired, comprising an electronic data processor configured for generating an index indicative of energy performance, ranging from an impaired energy performance to an enhanced energy performance, by carrying out the steps of: acquiring one or more result scores from a computer-based environmental metrics test administered multiple times over a period of time to said urban area, in which a higher score represents a higher energy performance; calculating one or more index to the urban area, which is indicative of a degree of energy performance of the urban area; detecting if said one or more index are above or below a predetermined threshold or classifying the calculated index into one class of a plurality of classes ranging from an impaired energy performance class to an enhanced energy performance class.

## Description

### TECHNICAL FIELD

The present disclosure relates to a system for use in discriminating urban areas according to energy performance, namely whether the energy performance of urban areas is enhanced or impaired, comprising an electronic data processor configured for generating a classification and an index indicative of energy performance in a urban area.

### BACKGROUND

At present, cities are responsible for 70% of global CO2 emissions (Dasgupta et al., 2022), with over 68% of the world's population projected to live in cities by 2050 (Ritchie & Roser, 2018). For this reason, urban areas become increasingly important in addressing global challenges related to energy conservation, climate change, and other environmental issues at large.

As acknowledged in the latest IPCC 6th Assessment Report (Shukla et al., 2022), urban form, i.e. the physical arrangement/ configurations of buildings and infrastructure is a key determinant and driver of urban energy consumption, and an important aspect to control for in order to improve the energy performance of cities, reduce pollution levels, and well as avoiding the carbon lock-in of its stock and infrastructure (Behnisch et al., 2012). Urban form has a multidimensional nature and can be translated by a variety of indicators (Silva et al., 2017). Further to that, there are various other factors that play a crucial role in urban transition to sustainable energy. These include a range of aspects, such as behavioural, technological and digitalization of systems, education, policies and regulations, among others.

The diversity of drivers of energy use in urban context is a challenge to measuring urban energy performance. Nevertheless, the measurement and consequent benchmarking of energy performance, applied to other contexts, has proven to be an effective and successful measure towards improved energy efficiency and has led to important energy savings. This is the case of Minimum Energy Performance Standards (MEPS) (EESC, 2022), energy labels (European Commission, 2021) for appliances or building codes.

Despite there are numerous sustainability indices to date, there is a lack of an energy sustainability index specifically targeting cities, and focused on "energy" (Marquez-Ballesteros et al., 2019). The authors proposed the UESI - Urban Energy Sustainability Index, which is a composite indicator with several layers and relatively broad scope (e.g. also covers waste recycling) aiming at describing how cities use energy.

There are no similar products in the market. Potential competitors include other I&D institutes, energy agencies or international organizations/initiatives such as the JRC/covenant of mayors.

More than half of world population lives in cities, with urban areas being responsible for 70% of global GHG emissions. Urban energy performance is a result of a set of complex and intertwined drivers, but one that is increasingly important to measure and track. The bulk of research has been focusing on developing composite indicators that are either at national level, or even if local, of broad nature and scope (e.g. sustainability at large) touching upon dimensions that do not offer clear insights on the existing energy use patterns.

The indicators considered cover a number of key areas, such as urban form, buildings, transport and urban infrastructure, digitalization, energy literacy, energy policy and targets, which are deemed to fall under the responsibility and control of local authorities, so that they can take further action in attaining more sustainable energy use patterns.

Document US10521863B2 relates to assessing climate change risk at a security level. A computing system receives a selection of a climate change scenario from a user operating a remote client device. The computing system generates one or more environmental metrics for one or more energy sources based on the scenario selected by the user. The computing system converts the one or more environmental metrics for the one or more energy sources into one or more profitability indicators. The computing system correlates at least one energy source of the one or more energy sources to each security. The computing system generates a projected climate change risk for each security based on the one or more environmental metrics for the one or more energy sources. The computing system provides a data set representing the projected climate change risk to the remote client device.

US20120316916A1 provides a News/Media Analytics System (NMAS) adapted to automatically process and "read" news stories and content from blogs, twitter, and other social media sources, represented by news/media corpus, in as close to real-time as possible. Quantitative analysis, techniques or mathematics, such as green scoring/composite module and sentiment processing module are processed to arrive at green scores, green certification, and/or model the value of financial securities, including generating a green score, green compliance certification, and a composite environmental or green index. The NMAS automatically processes news stories, filings, new/social media and other content and applies one or more models against the content to determine green scoring and/or anticipate behavior of stock price and other investment vehicles. The NMAS leverages traditional and, especially, social media resources to provide a sentiment-based solution for scoring the "greenness" of companies.

These facts are disclosed in order to illustrate the technical problem addressed by the present disclosure.

### GENERAL DESCRIPTION

The present disclosure constitutes a stepping stone in the development of an urban energy performance rating system by identifying a comprehensive and relevant batch of indicators that fall under the range of action of local authorities, and hence, that could potentially be intervened towards improved urban energy performances, and expectably leading to higher local compactivity and attractivity.

This work constitutes a stepping stone in the development of an urban energy performance rating system by identifying a comprehensive and relevant batch of indicators that fall under the range of action of local authorities, and hence, that could potentially be intervened towards improved urban energy performances, and expectably leading to higher local compactivity and attractivity.

At present, there is no such thing as an indicator framework envisioned at leading to an urban performance rating. There are only a number of composite indicators that are either applied at national scale, or not focused on energy specifically. The exception being the UESI - Urban Energy Sustainability Index, which however, still has a quite broad nature (e.g. considering waste treatment) and offers little insights on the drivers of energy use patterns, and hence not being able to empower municipalities to take action.

As mentioned above, it empowers local authorities to take action towards more sustainable energy use patterns and hence, climate change mitigation.

It allows to establish a common and transparent methodological framework to compare and benchmark urban areas, and provide clear signals and information to citizens and investors alike regarding the energy performance of a given city, so that they can decide in an informed way, where they would like to live, work, or invest on.

The rating system may be fine-tuned by identifying appropriate weights and it may be piloted in test case, if necessary for further finetuning.

The present disclosure aims to propose a batch of indicators to be used in the development of an urban energy performance classification, with a focus on the drivers of energy use that are under the responsibility of local authorities.

One of the main drawbacks of the index, though, is that it does not consider the different drivers of energy consumption, and hence offers little insights to local authorities on why such energy use patterns take place, and hence, on how to improve them.

The present disclosure proposes a batch of indicators that allows distinguishing cities based on their level of energy performance, and that is capable of measuring and ranking different urban areas, thus enabling to identify good practices and rewarding them. This, in turn, may motivate other cities to improve their sustainability levels.

It aims at constituting a stepping stone for the latter development of an urban energy performance label, by gathering a number of indicators aiming at translating and measuring different drivers of energy demand at urban level, with a specific focus on those that fall under the range of action of local authorities, and hence, that could potentially be intervened towards improved urban energy performances.

In a second and later stage, such indicators are structured and weighted with a view to identifying the energy performance rating (from A to G) belonging to the city at stake. Such energy performance rating is based on a comprehensive and relevant set of urban indicators, expanding it beyond urban form to include other relevant drivers such as: digitization, population education/literacy in environmental and energy aspects, and local energy policies.

There are several potential benefits to this:
allowing to benchmark cities based on their energy needs and consumption patterns based on a harmonized and comparable methodology, replicable elsewhere;
increasing energy performance visibility in a way that is easily-understandable by the general public (give the extensive application of energy labels in Europe and beyond);
driving continuous improvement by cities, and hence pushing towards higher performance levels
spillover benefits such as green marketing, and improved attractivity for investment, tourism, and business, among others.

This set of indicators helps answer questions such as: how does the influence of urban form, energy efficiency in buildings, sustainable transportation, and other factors vary while impacting energy demand in different geographic regions, and how is the effect of such factors expected to evolve over time for a particular city? This is ultimately a methodology that addresses a long-needed gap, primarily due to the complexity associated with the subject, involving many variables and dynamics, combined with a sectoral analysis culture. These issues have challenged the understanding of the relationship between the implications of the physical form of urban areas on energy, for example, considering travel patterns.

This disclosure includes a method for classifying urban energy performance, comprising the follow steps:
According to the measurement of a set of pre-established indicators of urban form, energy efficiency and use of local produced renewable energy in buildings, transportation and urban networks, digitalization, education, and local energy policies, to quantify the energy performance of a city;
Assigning a rating or classification to the city based on its energy performance, for example ranging from A to G in order to resemble those from appliances which are widely known and understood by the general public.

In an embodiment, the predetermined indicators can be weighted and structured to provide a comprehensive and relevant assessment of urban energy performance, accounting for the multiple dimensions around energy consumption in cities.

In an embodiment, the classification system enables benchmarking and comparison of energy performance among different urban areas, facilitating identification of exemplary practices and areas for improvement.

In an embodiment, said method further comprises the classification system to inform decision-making and policy development at the local level, by identifying the drivers of energy consumption and inefficiencies within specific sectors such as buildings and transportation.

It is disclosed a system for use in discriminating an urban area between an urban area with an energy performance impaired, EPI, and a non-EPI, comprising an electronic data processor configured for generating an index indicative of energy performance impairment, EPI, impairment in the urban area, by carrying out the steps of: acquiring one or more result scores from a computer-based environmental metrics test administered multiple times over a period of time to said urban area, in which a higher score represents a higher energy performance; calculating one or more index to the urban area based on its energy performance, which is indicative of a degree of presence of EPI; detecting if said one or more index are above or below a predetermined threshold.

In an embodiment, the computer-based environmental metrics test comprises a series of computer-based environmental subtests.

In an embodiment, the series of computer-based environmental metrics test is the series of tests of table 1.

**Table 1 - Indicators, divided among the different main areas of operation**

| **Domain** | **Indicator** | **Description** | **Metric** | **Unit** |
|---|---|---|---|---|
| **Urban form** | Intensity of the built environment | Population density in an urban area | Population/households /jobs per land area | People/km² |
| | Ground space index | Sense of compactness: built-up footprint in an urban area | Building coverage area/total ground area | m²/m² |
| | Floor space index | Sense of density by factoring in building height | Gross floor area/ total ground area | m²/m² |
| | Housing size | Number of bedrooms in residential units, which indicates the capacity and size of the dwelling | Number of bedrooms per dwelling | Count |
| | Connectivity | The degree to which two points communicate with each other (depends on spatial arrangement of networks and block size) | Average number of edges (e) per node (n)I n a given network, that is, C= e/n | Index |
| | Mixed-use index | Mix of uses /activities within a unit of analysis | Residential gross floor area/total GFA | % |
| | Green Spaces and Shading | Spatial distribution of green areas | Ai=Si, where Ai is (m2) of green areas and Si is total block area. | % |
| | Surface-to-volume ratio | Measures exposed area in relation to building volumetry | Ratio of external surface area to building volume | m²/m³ |
| **Buildings** | Energy performance of all municipal buildings | Including schools, libraries, civic buildings, sports halls | Energy consumption per unit area / energy rating | kWh/m² |
| | Level of renovation of municipal buildings | Reflects the effort to improve energy efficiency and overall condition. | Percentage of renovated municipal buildings | % |
| | Share of consumption from renewable energy sources in municipal buildings | Proportion of energy consumed in municipal buildings that originates from renewable energy sources | Percentage of energy consumption from renewable sources | % |
| | Renewable Energy Communities | Local initiatives that collectively develop and benefit from renewable energy projects, promoting sustainability and community engagement | Installed/ Planned capacity of renewable energy in RECs | MWh |
| **Transport and urban infrastructure** | Municipal fleet | Average fuel consumption in municipal vehicles, reflecting energy efficiency | Average fuel consumption per municipal vehicle | Litters/km |
| | Public Transport stops density | Density of stops | Number of public transport stops per land area | Stops/km² |
| | Cycling provisions | Existence of cycling infrastructure | Length of cycling lanes per street length | m/m |
| | Parking lot provisions | Provision of parking infrastructure | Parking places per land area | #/m² |
| | Density of Charging Stations for Electric Vehicles | Reflects the accessibility and support for electric vehicle charging infrastructure | Number of charging stations per land area | Stations/km² |
| | Park-and-ride systems | Particularly close to major transportation infrastructure (such as intermodal terminals, subway stations or train stations) | Number of park-and-ride facilities | unit |
| | Public Lighting | Average consumption per light bulb | Energy consumption per public lighting installation | kWh/bulb |
| **Digitalization** | Digitalization of transportation data | Real-time public transport information at Public Transport stops (locally or linked to apps) | Percentage of PT stops with real-time information integration | % |
| | Remote work | Share of remote and/or hybrid working models available to civil service workers | Percentage of civil service workers with access to remote and/or hybrid working models | % |
| | Adoption of Smart Grid Technologies | Grid infrastructure upgraded with smart grid technologies, enabling improved grid stability, renewable energy integration, and efficient energy management | Percentage of grid infrastructure upgraded with smart grid technologies | % |
| | Diffusion of Smart devices in buildings | Buildings, businesses, or organizations using energy monitoring and control systems to optimize energy consumption | Percentage of buildings/businesses with smart devices installed | % |
| **Education** | Environmental education and energy literacy | Activities and programs aimed at promoting environmental awareness and knowledge about energy | Number of participants in activities promoted | unit |
| **Policy** | Financial Incentives for Renewable | Total financial incentives to promote investments in renewable energy projects | Amounts devoted to financial incentives in the unit of analysis per | Count |
| | Energy and Energy Efficiency Investments | and energy-efficient technologies at local level | number of incentives given | |
| | Sustainable Building Certification Program | Number of buildings certified or rated under a sustainable building certification program endorsed or implemented by the municipality | Number of certified buildings | Count |
| | Local strategies for reducing energy poverty | Existence of a plan to mitigate energy poverty; Existence of a local office to support vulnerable population | Existence of a: | Binary |
| | | | - plan to address energy poverty and mitigate its effects; | |
| | | | - local office or support program dedicated to assisting the population with energy poverty-related issues | |
| **Others** | Energy targets | Established targets for reduction of energy use and emissions at the municipal level until 050 | Percentage of achievement in relation to target | % of plan achievement |
| | Local action plans | Climate change mitigation plan approved by municipality and under implementation | Implementation progress of climate change mitigation plan | % of plan implementation |

In an embodiment, the computer-based environmental metrics test is individual/km2 and/or m2/m2 and/or count and/or average number of edges per node, n, a given network and/or ratio of external surface area to building volume.

In an embodiment, the computer-based environmental metrics test is percentage of civil service workers with access to remote and/or hybrid working models and/or percentage of grid infrastructure upgraded with smart grid technologies and/or percentage of buildings/businesses with smart devices installed.

In an embodiment, the computer-based environmental metrics test is a number of participants in activities promoted and/or amounts devoted to financial incentives in the unit of analysis per number of incentives given and/or number of certified buildings.

In an embodiment, the computer-based environmental metrics test is a percentage of achievement in relation to target and/or implementation progress of climate change mitigation plan.

It is also disclosed a computer-based method for generating an index indicative of energy performance impairment, EPI, impairment in an urban area, by carrying out the steps of: acquiring one or more result scores from a computer-based environmental metrics test administered multiple times over a period of time to said urban area, in which a higher score represents a higher energy performance; calculating one or more index to the urban area based on its energy performance, which is indicative of a degree of presence of EPI.

It is also disclosed a non-transitory computer readable medium having instructions stored thereon, which, when executed by a processor, cause the processor to perform an operation of assessing an urban area between an urban area with an energy performance impaired, EPI, and a non-EPI, the operation comprising: acquiring one or more result scores from a computer-based environmental metrics test administered multiple times over a period of time to said urban area, in which a higher score represents a higher energy performance; calculating one or more index to the urban area based on its energy performance, which is indicative of a degree of presence of EPI.

The present disclosure was developed with the Comissão de Coordenação e Desenvolvimento Regional do Norte in the scope of the project "DECARBONIZE - DEvelopment of strategies and policies based on energy and non-energy applications towards CARBON neutrality via digitalization for citIZEns and society" (NORTE-01-0145-FEDER-000065) supported by Norte Portugal Regional Operational Programme (NORTE 2020), under the PORTUGAL 2020 Partnership Agreement, through the European Regional Development Fund (ERDF).

### DETAILED DESCRIPTION

The present disclosure relates to a system for use in discriminating urban areas according to energy performance, namely whether the energy performance of urban areas is enhanced or impaired, comprising an electronic data processor configured for generating a classification and an index indicative of energy performance in an urban area.

The label, and hence the indicators that led to it, are able to support cities in decision-making, by identifying the factors or variables that are causing the largest consumption or inefficiencies. This helps inform urban planning and policy-making at local level by providing guidance on options to take among various sectors (especially those representing the highest energy consumption - buildings, transportation) and enabling adequate scientific framework within the public, private, and political spheres.

The energy performance label and its indicators can also support local authorities in developing customized urban transition roadmaps based on respective energy profiles, with a broad lens that covers not only energy implications but also other aspects such as greenhouse gas emissions (and thus, the effect of climate change), air quality, access to energy (related to energy spending), among others.

Therefore, this work provides a necessary contribution to sustainable development and transition policies worldwide, capable of supporting local energy and planning institutions in their energy transition paths and enabling the quantification of the magnitude of the impact that individual components of the urban form and the other referred drivers have on urban energy use, thus trying to understand how the level of energy sustainability varies across cities.

The indicators proposed ground on a comprehensive review on urban form factors with energy relevance (Silva et al., 2017). As mentioned, this work focuses on fields where municipalities have some form of competence, and even responsibility, in terms of energy impact or use. These areas include: energy performance of infrastructure, buildings, and services, especially those under municipal management, urban digitalization, education, and local energy policies.

The use of indicators within the scope of municipalities is due to the difficulty that these entities face in taking action or demanding action from privately owned or nationally owned public resources. For this reason, only indicators in domains where local authorities can engage are normally to be used, allowing them to act while setting an example.

See Table 1 above comprising Indicators of energy performance, by acting area.

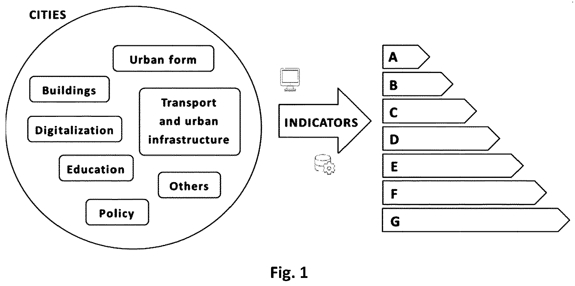

Figure 1 shows a schematic representation of the approach behind the disclosed method and system.

The indicators proposed above should be quantified/estimated for each municipality, and then used in the development of a classification system that allows for comparisons among different urban areas and identify those that are achieving better results. Through this approach, it is possible to recognize best practices and encourage other areas to improve their energy performance.

To implement these indicators and classifications, efficient mechanisms for data collection and continuous monitoring need to be established. This enables the evaluation of energy performance overtime, identify areas for improvement, and assess the effectiveness of measures taken.

By following these paths, it is possible to comprehensively assess the energy performance of urban areas, promoting an urban environment with reduced environmental impact and a higher quality of life for its inhabitants.

Being a conceptual framework to be used in the development of a classification/ labelling system for urban energy performance, there are not data available to use as evidence of the technical advantage of the proposed solution.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof. The above described embodiments are combinable. The following claims further set out particular embodiments of the disclosure.

### References

Behnisch, M., Bräuer, A., Schumacher, U., & Deilmann, C. (2012). Urban Pattern Specification using Spatial Metrics and Density Values. In H. Arndt, G. Knetsch, & W. Pillman (Eds.), Proceedings of the 26th International Conference "Informatics for Environmental Protection": Vol. Part 1: Core Application Areas (pp. 319-329). Shaker Verlag Aachen. http://enviroinfo.eu/sites/default/files/pdfs/vol7574/0319.pdf.
Dasgupta, S., Lall, S., & Wheeler, D. (2022, January 5). Cutting global carbon emissions: Where do cities stand? https://blogs.worldbank.org/sustainablecities/cutting-global-carbon-emissions-where-do-cities-stand.
EESC. (2022, October 11). Minimum Energy Performance Standards (MEPS) in the Residential Sector. European Economic and Social Committee. https://www.eesc.europa.eu/en/our-work/publications-other-work/publications/minimum-energy-performance-standards-meps-residential-sector.
European Commission. (2021). About the energy label and ecodesign. https://commission.europa.eu/energy-climate-change-environment/standards-tools-and-labels/products-labelling-rules-and-requirements/energy-label-and-ecodesign/about_en.
Marquez-Ballesteros, M.-J., Mora-López, L., Lloret-Gallego, P., Sumper, A., & Sidrach-de-Cardona, M. (2019). Measuring urban energy sustainability and its application to two Spanish cities: Malaga and Barcelona. Sustainable Cities and Society, 45, 335-347. https://doi.org/10.1016/j.scs.2018.10.044
Ritchie, H., & Roser, M. (2018). Urbanization. Our World in Data. https://ourworldindata.org/urbanization.
Shukla, P. R., Skea, J., Reisinger, A., & Slade, R. (2022). Climate Change 2022 Mitigation of Climate Change-WG3 (No. AR6; WG3, p. 2258). IPCC - Intergovernmental Panel on Climate Change. chrome-extension://efaidnbmnnnibpcajpcglclefindmkaj/https://www.ipcc.ch/report/ar6/wg3/ downloads/report/IPCC AR6 WGIII_FuIIReport.pdf.
Silva, M., Oliveira, V., & Leal, V. (2017). Urban Form and Energy Demand: A Review of Energy-relevant Urban Attributes. Journal of Planning Literature, 32(4), 346-365. https://doi.org/10.1177/0885412217706900.

## Claims

1. System for use in discriminating urban areas according to energy performance, comprising an electronic data processor configured for generating an index indicative of energy performance, ranging from an impaired energy performance to an enhanced energy performance, by carrying out the steps of:
acquiring one or more result scores from a computer-based environmental metrics test administered multiple times over a period of time to said urban area, in which a higher score represents a higher energy performance;
calculating one or more index to the urban area based on its energy performance, which is indicative of a degree of energy performance of the urban area;
detecting if said one or more index are above or below a predetermined threshold or classifying the calculated index into one class of a plurality of classes ranging from an impaired energy performance class to an enhanced energy performance class.

2. System according to the previous claim, wherein the computer-based environmental metrics test comprises a series of computer-based environmental subtests.

3. System according to the previous claim wherein the series of computer-based environmental metrics test is the series of tests of table 1.

4. System according to any of the claims wherein the computer-based environmental metrics test is individual/km² and/or m2/m2 and/or count and/or average number of edges per node, n, a given network and/or ratio of external surface area to building volume.

5. System according to any of the claims wherein the computer-based environmental metrics test is percentage of civil service workers with access to remote and/or hybrid working models and/or percentage of grid infrastructure upgraded with smart grid technologies and/or percentage of buildings/businesses with smart devices installed.

6. System according to any of the claims wherein the computer-based environmental metrics test is a number of participants in activities promoted and/or amounts devoted to financial incentives in the unit of analysis per number of incentives given and/or number of certified buildings.

7. System according to any of the claims wherein the computer-based environmental metrics test is a percentage of achievement in relation to target and/or implementation progress of climate change mitigation plan.

8. Computer-based method for generating an index indicative of energy performance of an urban area, by carrying out the steps of:
acquiring one or more result scores from a computer-based environmental metrics test administered multiple times over a period of time to said urban area, in which a higher score represents a higher energy performance;
calculating one or more index to the urban area based on its energy performance, which is indicative of energy performance of the urban area;
detecting if said one or more index are above or below a predetermined threshold or classifying the calculated index into one class of a plurality of classes ranging from an impaired energy performance class to an enhanced energy performance class.

9. Method according to the previous claim, wherein the computer-based environmental metrics test comprises a series of computer-based environmental subtests.

10. Method according to the previous claim wherein the series of computer-based environmental metrics test is the series of tests of table 1.

11. A non-transitory computer readable medium having instructions stored thereon, which, when executed by a processor, cause the processor to perform an operation of assessing energy performance of an urban area, the operation comprising:
acquiring one or more result scores from a computer-based environmental metrics test administered multiple times over a period of time to said urban area, in which a higher score represents a higher energy performance;
calculating one or more index to the urban area based on its energy performance, which is indicative of a degree of energy performance of an urban area.
